# EUROPÄISCHE PATENTANMELDUNG

(11) **EP 0 832 592 A1**
(43) Veröffentlichungstag der Anmeldung: **01.04.1998**
(21) Anmeldenummer: 97116215.1
(22) Anmeldetag: 18.09.1997
(51) Int. Cl.: A47J 31/40

(54) **Maschine zur automatischen Zubereitung von Espresso-Kaffee**

(30) Priorität: 25.09.1996 IT BO960481
(71) Anmelder: Euromatik S.r.l., 40033 Casalecchio di Reno (Bo) (IT)
(72) Erfinder: Santi, Giuseppe, 40033 Casalecchio di Reno (BO) (IT)
(74) Vertreter: Gustorf, Gerhard, Dipl.-Ing.

(57) **Zusammenfassung**

Maschine zur automatischen Zubereitung von Espresso-Kaffee mit einer Mitnahmeeinrichtung (43) für Bänder (3) mit vorgepreßten, zuzuführenden Kaffeepulverkuchen (4), gekennzeichnet durch wenigstens eine untere Kalotte (21) zur Aufnahme von Kaffeepulverkuchen, welche bei einer vertikalen Verschiebung über eine Kurbelwelle (9) und eine Pleuelstange (11) mit axialem Druck beaufschlagt wird und dabei auf wenigstens eine feste, obere Kalotte (33) zur Aufnahme des Kaffeepulverkuchens trifft, der eine Heizgruppe (30, 31, 32) zugeordnet ist, wobei den Zwischenraum zwischen den Kalotten (21, 33) die vorgepreßten Monodosiskuchen (4) eines Bandes (3) nacheinander in geführter Weise durchlaufen und das Band (3) an seinen Flügeln von Rollen (43A, 43B) mitgenommen wird, die auf den Ausgangsabschnitt der verbrauchten Kaffeepulverkuchen (4) einwirken.

## Beschreibung

Die Erfindung betrifft eine Maschine zur automatischen Zubereitung von Espresso-Kaffee mit einer Mitnahmeeinrichtung für Bänder mit vorgepreßten, zuzuführenden Kaffeepulverkuchen, umfassend wenigstens eine untere Kalotte zur Aufnahme von Kaffeepulverkuchen, welche bei einer vertikalen Verschiebung über eine Kurbelwelle und eine Pleuelstange mit axialem Druck beaufschlagt wird und dabei auf wenigstens eine feste, obere Kalotte zur Aufnahme des Kaffeepulverkuchens trifft, der eine Heizgruppe zugeordnet ist, wobei den Zwischenraum zwischen den Kalotten die vorgepreßten Monodosiskuchen eines Bandes nacheinander in geführter Weise durchlaufen und wobei das Band an seinen Flügeln von Rollen mitgenommen wird, die auf den Ausgangsabschnitt der verbrauchten Kaffeepulverkuchen einwirken.

Bei Maschinen für die Zubereitung von italienischem Espresso-Kaffee ist es bekannt, den Kaffee in Form von sogenannten Oblaten oder Kaffeepulverkuchen zuzuführen, die aus vorgepreßten Monodosen von Pulverkaffee bestehen und zwischen Filterpapier eingeschlossen sind, wonach sie entweder hintereinander in Bändern für die Beschickung automatischer Maschinen oder - für die manuelle Zubereitung - einzeln in Bändern mit vorgestanzten Abreißlinien verpackt sind. Der Einsatz vorbereiteter Oblaten, die nacheinander in Bändern eingeschlossen sind, ist besonders vorteilhaft für die Beschickung automatisch arbeitender Maschinen, und zwar aufgrund der Einfachheit, der Hygiene und der sofortigen Verfügbarkeit, Eigenschaften, die diesem Produkt von Anfang an innewohnen; daraus erklärt es sich, daß es bereits zahlreiche Konstruktionen für automatische Maschinen gibt, die so ausgelegt sind, daß sie mit dem erläuterten Präparat beschickt werden können.

Der Erfindung liegt vor allem die Aufgabe zugrunde, eine Maschine zur automatischen Zubereitung von italienischem Espresso-Kaffee zur Verfügung zu stellen, welche mit Monodosisoblaten beschickt wird, die hintereinander in Bändern verpackt sind, wobei die Maschine sich gegenüber bekannten Maschinen durch eine besonders einfache Konstruktion und Betriebsweise abheben soll, insbesondere durch einen vorteilhaften Aufbau und eine zuverlässige Funktion des Zuführsystems.

Gemäß einer weiteren Aufgabe soll die Lösung dieses Problems mit Hilfe einer möglichst rationellen Struktur erreicht werden, die in besonders einfacher und schneller Weise auch sehr tiefgreidende Wartungs- und Reparatureingriffe ermöglicht.

Gemäß einer weiteren Aufgabe der Erfindung soll die Zuführvorrichtung so ausgebildet sein, daß sie soweit wie möglich das Zuführband geführt hält, auch unter Berücksichtigung von Änderungen der Eigenschaften, Festigkeit und Dichtheit aufgrund längerer Einsatzdauer.

Die erläuterten Ziele sollen ferner durch eine Vorrichtung erreicht werden, die weitestgehend modular aufgebaut ist.

Ferner soll mit der Erfindung erreicht werden, daß die Vorrichtung auch für andere Anwendungsfälle eingesetzt werden kann.

Schließlich soll bei der Lösung der genannten Aufgaben eine Vorrichtung geschaffen werden, die einfach und wirkungsvoll ist, eine sichere Betriebsweise hat und im Verhältnis zu den in der Praxis erzielten Ergebnissen wirtschaftlich arbeitet.

Diese und weitere Aufgaben werden gemäß der Erfindung durch eine Maschine zur automatischen Zubereitung von Espresso-Kaffee gelöst, die mit einer Mitnahmeeinrichtung für Bänder mit vorgepreßten, zuzuführenden Kaffeepulverkuchen ausgerüstet ist und gemäß der Erfindung wenigstens eine untere Kalotte zur Aufnahme von Kaffeepulverkuchen hat, die bei einer Vertikalverschiebung über eine Kurbelwelle und eine Pleuelstange mit axialem Druck beaufschlagt wird und dabei auf wenigstens eine feste, obere Kalotte zur Aufnahme des Kaffeepulverkuchens trifft, welcher eine Heizgruppe zugeordnet ist, wobei den Zwischenraum zwischen den Kalotten die vorgepreßten Monodosiskuchen eines Bandes nacheinander in geführter Weise durchlaufen und das Band an seinen Flügeln von Rollen mitgenommen wird, die auf den Ausgangsabschnitt der verbrauchten Kaffeepulverkuchen einwirken.

Weitere Merkmale und Vorteile der Erfindung ergeben sich aus der nachfolgenden Beschreibung eines bevorzugten Ausführungsbeispieles, das ohne Einschränkungen in der Zeichnung dargestellt ist. Es zeigen:
Figur 1 eine Vorderansicht einer Maschine zur automatischen Zubereitung von Espresso-Kaffee mit einer erfindungsgemäß ausgebildeten Mitnahmeeinrichtung für die zuzuführenden, vorgepreßten Kaffeepulverkuchen,
Figur 2 eine Schnittdarstellung der Maschine in der Mittelebene A-A' der Figur 1,
Figur 3 eine teilweise geschnittene Vorderansicht der Maschine, bei der der Mechanismus in einer ersten Betriebsstellung gezeigt ist,
Figur 4 eine der Figur 3 entsprechende Darstellung in einer zweiten Betriebsstellung des Mechanismus,
Figur 5 eine Seitenansicht der im Schnitt dargestellten Mitnahmeeinrichtung für das Band aus vorgepreßten Kaffeepulverkuchen für dessen Zuführung in die Maschine in der Schnittebene B-B' der Figuren 3 und 4.

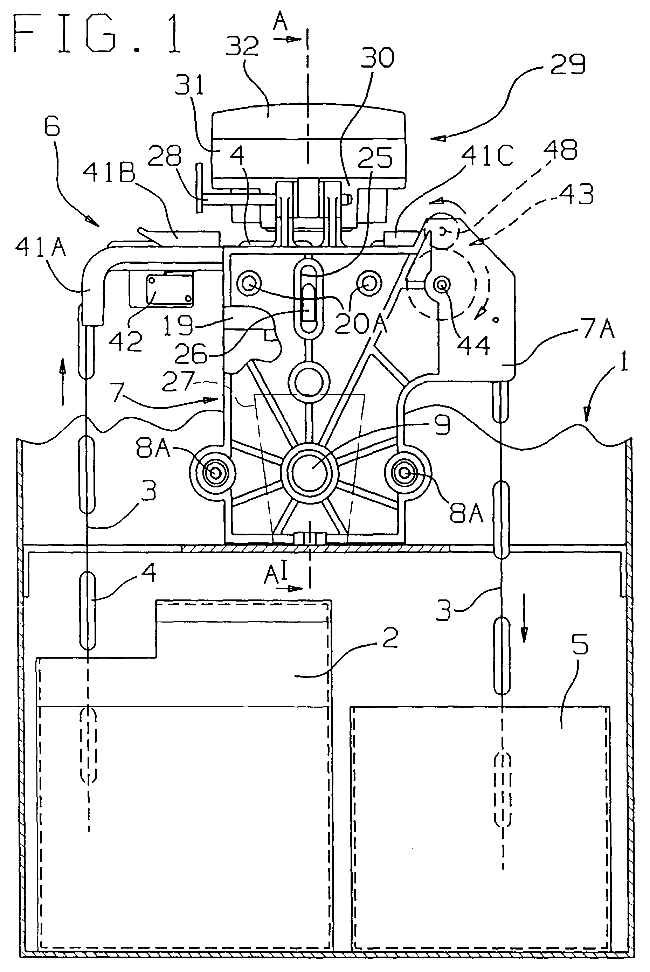

Wie sich aus der Zeichnung und insbesondere aus Figur 1 ergibt, ist mit 1 ein Gehäuse bezeichnet, das einen Behälter 2, vorzugsweise z.B. einen handelsüblichen, offenen Behälter, für ein Band 3 aus Monodosis-Oblaten 4 vorgepreßten Pulverkaffees, sowie einen Sammelbehälter 5 für die verbrauchten Oblaten oder Kaffeepulverkuchen aufnimmt.

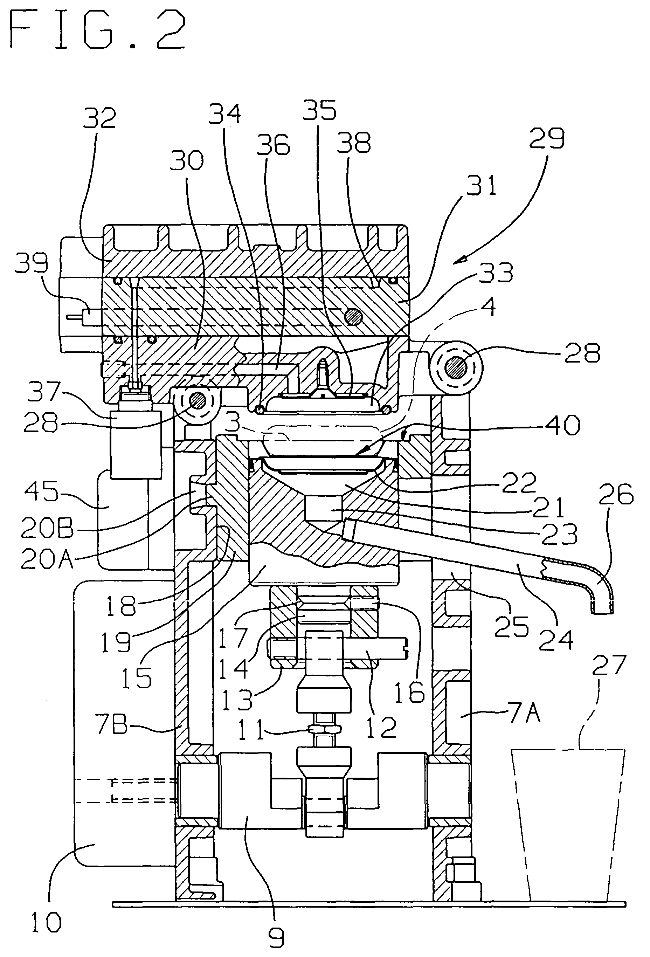

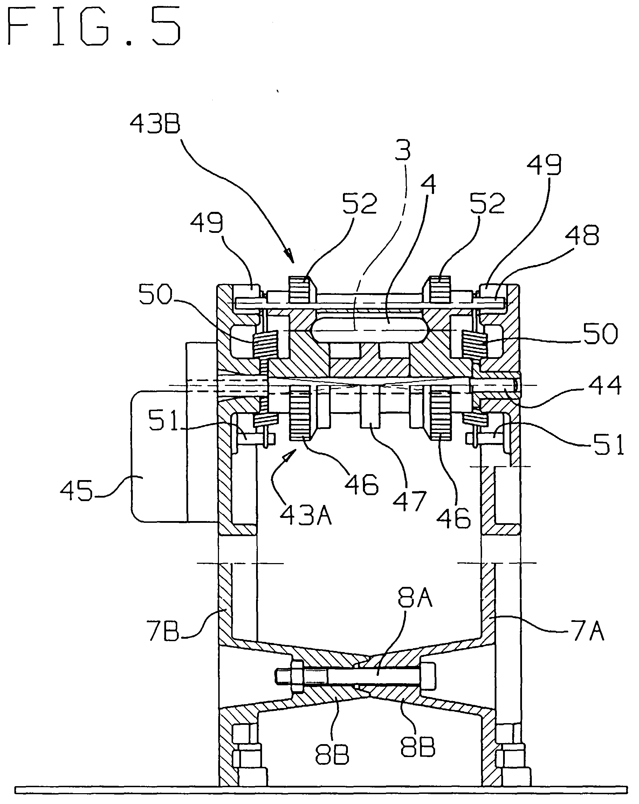

Über dem Behälter 2 und dem Sammelbehälter 5 ist die Maschine 6 gemäß der Erfindung angebracht, welche ebenfalls in dem Gehäuse 1 eingeschlossen ist. Sie hat ein kastenförmiges Unterteil 7, das gemäß Figur 2 aus zwei Wänden 7A und 7B besteht, die miteinander durch zwei Bolzen 8A verbunden sind; diese sind zum Zwecke der Selbstzentrierung in konische Sitze 8B eingesteckt, welche mit ihren Spitzen eine Nut- und Federverbindung herstellen (vgl. Figur 5).

Figur 2 zeigt weiter, daß zwischen den Wänden 7A und 7B eine Kurbelwelle 9 gelagert ist, die von einem Elektromotor 10 angetrieben wird und mit der eine längenveränderliche Pleuelstange 11 verbunden ist. Der Kopf der Pleuelstange 11 ist an einem Stift 12 angelenkt, der sich in einer Buchse 13 abstützt. In die Buchse 13 greift der untere Fortsatz 14 eines Kolbens 15 ein, in welcher er über einem Gewindestift 16 fixiert ist, der in eine Umfangsnut 17 eingreift, die in den Fortsatz 14 eingearbeitet ist.

Aus Figur 2 geht ferner hervor, daß der Kolben 15 in einem Zylinder 18 hin- und herbeweglich gelagert ist. Der Zylinder 18 ist in einem Profilstück 19 ausgebildet, welches zwischen den beiden Wänden 7A und 7B eingeschlossen und dort von seitlichen Vorsprüngen 20A fixiert ist, welche in Sitze 20B eingreifen, die in die Seitenwände 7A und 7B eingearbeitet sind, die an diesen Stellen eine entsprechene Formgebung aufweisen.

Der Kolben 15 hat einen vertieften Kolbenboden, so daß dort eine untere Kalotte 21 gebildet wird, die zur Aufnahme einer Kaffeedosis-Oblate dient; zu diesem Zweck ist die untere Kalotte 21 mit einer Filterschale 22 und einer Ablauföffnung 23 versehen, die in eine Leitung 24 mündet. Die Leitung 24 steht nach außen vor und erstreckt sich durch ein Schlitzloch 25, das in die vordere Wand 7A eingearbeitet ist; an ihrem äußeren Ende hat die Leitung 24 einen Schnabel 26, unter den ein Becher 27 für das fertige Getränk gestellt werden kann, beispielsweise ein Wegwerfbecher.

Am oberen Bereich des kastenförmigen Unterteils 7 ist mit Hilfe von zwei Bolzen 28 ein Kopf 29 befestigt, der aus einem Turm aus drei schichtweise übereinanderliegenden Elementen besteht, die zu einem Paket vereinigt sind, d.h. einem unteren Element 30, einem mittleren Element 31 und einem oberen Element 32.

In das untere Element 30 ist eine obere Kalotte 33 zur Aufnahme eines Kaffeepulverkuchens eingearbeitet, die von einem Dichtring 34 umgeben ist und der unteren Kalotte 21 gegenüberliegt. In der oberen Kalotte 33 ist ein Filter 35 befestigt, über welchem eine Leitung 36 für die Zufuhr heißen Wassers mündet. In die Leitung 36 ist ein Dreiwege-Elektromagnetventil 37 eingesetzt, das die Verbindung mit einer Leitungsschlange 38 mit ebenem Verlauf steuert, welche in die Schnittebene zwischen mittlerem Element 31 und oberem Element 32 des Turmes 29 so eingearbeitet ist, daß sie zusammen mit einem elektrischen Widerstand 39, der in der Wandstärke des mittleren Elementes 31 angebracht und über dessen gesamte Fläche verteilt ist, eine Heizgruppe bildet.

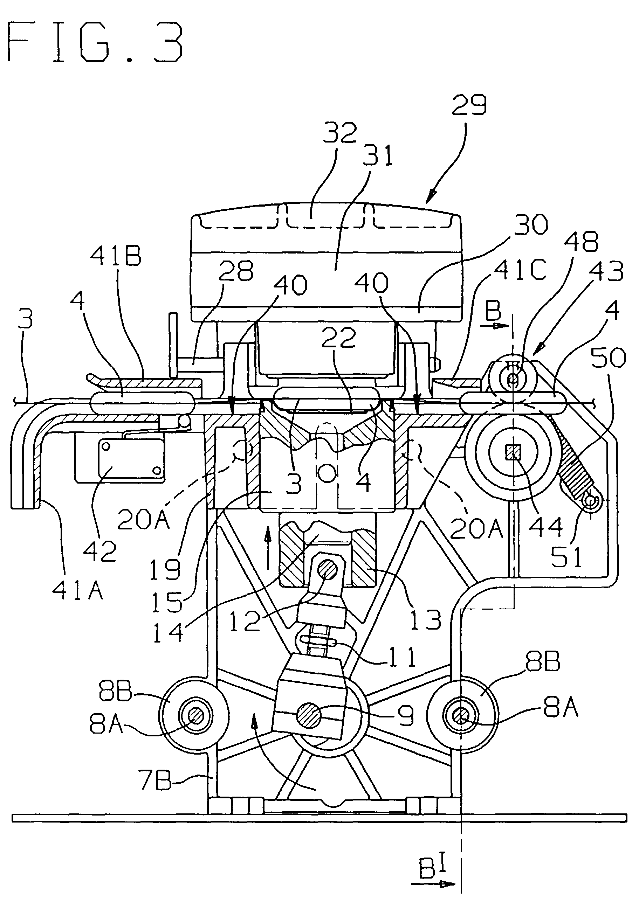

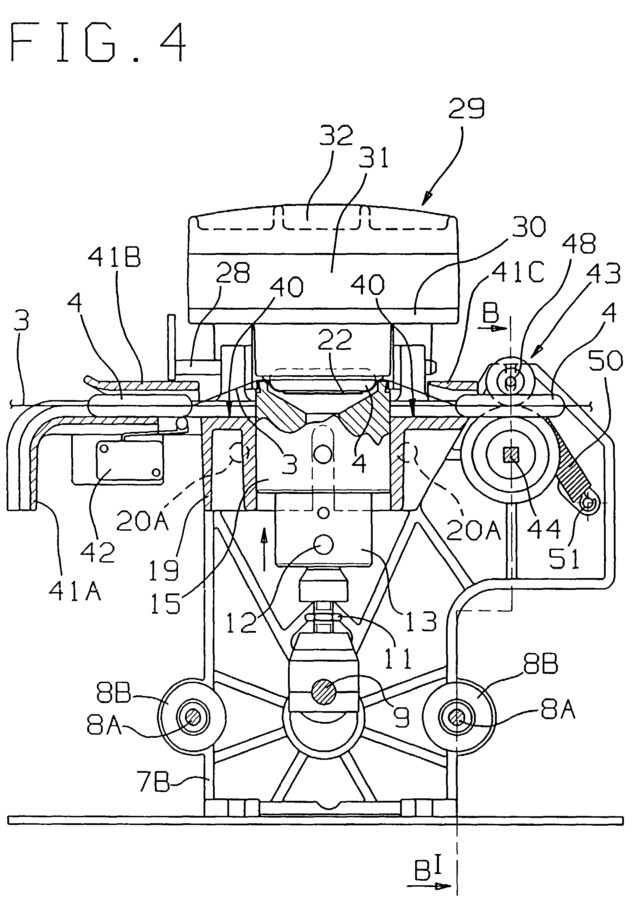

Der Zwischenraum zwischen der unteren Kalotte 21 und der oberen Kalotte 33 ergänzt den Zwischenabschnitt einer Führungsbahn 40 für das Band 3 aus Oblaten 4 (vgl. Figuren 3 und 4). Die Führungsbahn 4 besteht in der mit einem Pfeil angegebenen Förderrichtung des Bandes 3 gesehenen Richtung aus einem hinteren Vorsprung 41A, der an dem Profilstück 19 angeformt ist, über dem Behälter 2 liegt und mit einem Sensor 42 zur Feststellung der Anwesenheit der Oblaten 4 ausgerüstet ist. Über diesem Vorsprung 41A erstreckt sich eine Brücke 41B, die die Oblaten 4 von oben hält und die Umlenkung aus der vertikalen Zuführrichtung in die horizontale Einführrichtung erleichtert.

In der beschriebenen Förderrichtung gesehen hat die Führungsbahn 40 im vorderen Bereich eine zweite Brücke 41C zur Sicherung der Kaffeepulveroblaten 4 von oben her; anschließend mündet die Führungsbahn 40 in eine Mitnahmeeinrichtung 43 für das Band 3 (vgl. Figuren 3 und 4 zusammen mit Figur 5), die aus einer angetriebenen, unteren Rolle 43A und einer freilaufenden, oberen Rolle 43B besteht. Die beiden Rollen sind zwischen den beiden Wänden 7A und 7B gelagert und wirken miteinander auf die dazwischen liegenden, seitlichen Flügel des Bandes 3 ein.

Wie Figur 5 zeigt, hat die untere Rolle 43A einen Stift 44 mit einem im Mittelabschnitt quadratischen Querschnitt. Der Stift 44 wird von einem Elektromotor 45 in Drehung versetzt und trägt an beiden Seiten je eine gerändelte Rolle 46. Die beiden seitlichen Rollen 46 sind an ihrer Innenseite kegelförmig angesenkt, so daß sie sich tangential an die untere Umfangsform der Kaffeepulveroblaten 4 anpassen. Der Stift 44 trägt ferner eine mittlere Rolle 47, die sich am Bauch der Kaffeepulverkissen anlegt.

Figur 5 zeigt ferner, daß die obere Rolle 43B hingegen aus einem freilaufenden Stift 48 besteht, der mit seinen Enden in Schlitze 49 an den Rändern der beiden Wände 7A und 7B eingreift, wo er lediglich durch die Zugkraft von Schraubenfedern 50 gehalten wird, die mit einem Ende an dem Stift angreifen und mit dem anderen Ende an Abstützpunkten 51 der Wände 7A und 7B eingehakt sind.

Der freilaufende Stift 48 trägt außerdem zwei seitliche, freilaufende Rollen 52, die mit den seitlichen Rollen 46 des angetriebenen Stiftes 44 zusammenwirken und ebenfalls gerändelt sind; die beiden seitlichen Rollen 52 sind ebenfalls an ihrer Innenseite kegelförmig ausgesenkt, so daß sie in tangentialer Richtung der oberen Umgangsform der Kaffeepulveroblate 4 entsprechen.

Im Anschluß an die Beschreibung des Aufbaus einer bevorzugten Ausführungsform der Maschine gemäß der Erfindung wird nun deren Funktionsweise erläutert.

Um die Zuführung in Gang zu setzen, wird das Band 3 aus den Kaffeeportionen 4 in die Führungsbahn 40 gelegt; hierzu kann der Faden, der handelsüblich mit dem Band verbunden ist, zwischen die untere Rolle 43A und die obere Rolle 43B eingefädelt werden, bis die erste Portion 4 genau im Zwischenraum zwischen der unteren Kalotte 21 und der oberen Kalotte 33 liegt; in dieser Stellung ist die Kaffeeportion vorbereitet für die schrittweise Weiterbewegung, worauf nachstehend näher eingegangen wird.

Sobald diese Zuführung stattgefunden hat, ist die Maschine für die automatische Bereitstellung von Kaffeeportionen vorbereitet. Aufgrund eines in bekannter Weise eingegebenen Steuerbefehls, beispielsweise durch Einführen einer Münze oder Wertmarke, führt die Mitnahmeeinrichtung 43 einen Förderschritt aus, bis das Band 3 den ersten Kaffeepulverkuchen 4 in seine exakte Lage zwischen der unteren Kalotte 21 und der oberen Kalotte 33 gelegt hat (vgl. Figuren 2 und 3).

In der Zwischenzeit dreht sich der Elektromotor 10 und bewegt über die Pleuelstange 11, deren Länge entsprechend eingestellt ist, die Kurbelwelle 9 um eine halbe Umdrehung, wodurch der Kolben 15 in dem Zylinder 18 angehoben wird; dabei wird die untere Kalotte 21 mit ihrem vertieften Kolbenboden nach oben gebracht, bis sie auf die darüberliegende, obere Kalotte 33 trifft. Dabei wird gemäß Figur 4 die Oblate 4, die in dem vertieften Kolbenboden liegt, unter Druck mit optimaler Abdichtung eingeschlossen, weil über den Kolben 15 eine axial zentrierte Kraft ausgeübt wird.

Figur 2 zeigt, daß nun das Elektromagnetventil 37 betätigt wird, um die Zufuhr einer zuvor erhitzten Wassermenge in die Leitung 36 einzuleiten. Die Wassermenge wurde in der Wärmetauschereinheit erhitzt, welche aus dem mittleren Element 31 und dem oberen Element 32 des Turmes 29 besteht. Der heiße Wasserstrom trifft nun auf die Kaffeeportion 4, reichert sich mit der Essenz an und fließt über die Ablauföffnung 23 in die Leitung 24, um anschließend in den Becher 27 zu fließen, der manuell oder automatisch unterhalb des Schnabels 26 aufgestellt wurde.

Nach Fertigstellung des Getränkes geben die untere Kalotte 21 und die obere Kalotte 33 den ausgelaugten Kuchen 4 frei, indem sie sich relativ zu der oben erläuterten Schließstellung in umgekehrter Richtung voneinander wegbewegen. Danach tritt die Mitnahmeeinrichtung 43 wieder in Funktion und verschiebt das Band 3 um einen Schritt, so daß der ausgelaugte Kaffeepulverkuchen 4 aus seiner Stellung zwischen der unteren Kalotte 21 und der oberen Kalotte 33 herausgeführt wird, bis er sich über dem Rand der unteren Kalotte 21 befindet, ohne daß dabei die folgende, noch frische Kaffeemehlportion 4 auch nur teilweise in diese untere Kalotte eintritt. Auf diese Weise wird erreicht, daß über eine mehr oder wenige lange Zeitspanne zwischen zwei Zubereitungszyklen für ein Getränk weder die ausgelaugte Kaffeemehlportion 4 aufweicht oder verrottet noch die nachfolgende, neue Kaffeemehlportion 4 verdirbt, was in der feuchten und warmen Umgebung, die für einige Zeit zwischen den beiden Kalotten herrscht, begünstigt würde.

Bei Empfang eines neuen Aktivierungsbefehls wird die noch unverbrauchte Kaffeemehlportion 4 in der beschriebenen Weise in die genaue Stellung zwischen der unteren Kalotte 21 und der oberen Kalotte 33 gebracht, so daß eine neue Getränkeportion hergestellt werden kann.

Die Vorschubschritte für das Band 3 werden durch geeignete Zeitgebung durch das Vorschubende vorgegeben, wenn der Sensor 42 die Anwesenheit der folgenden Portion 4 feststellt. Der Sensor 42 arbeitet übrigens auch als Funktionshemmelement, wenn er auf der Führungsbahn keine Oblate 4 feststellt, d.h. bei Ende des Bandes 3. Darüber hinaus kann er ggf. auch als "Zähler" eingestellt werden, um ein bevorstehendes Erschöpfen der Portionen 4 des Bandes 3, die in einem handelsüblichen Behälter 2 untergebracht sind, anzukündigen.

Der Vorschub des Bandes 3 wird von der Mitnahmeeinrichtung 43 durchgeführt, die lediglich auf die Seitenränder oder Flügel einwirkt, die sich zwischen den angetriebenen, unteren Rollen 46 und den freilaufenden, oberen Rollen 52 befinden. Die oberen Rollen 52 werden gegen die unteren Rollen 46 nur durch die Zugkraft der Schraubenfedern 50 gezogen, welche auf den Stift 48 einwirken. Die innere Aussparung, die in symmetrischer Weise sowohl in die unteren, angetriebenen Rollen 46 als auch in die oberen, freilaufenden Rollen 52 eingearbeitet ist, wirkt als Führungsbett für die ausgelaugten Portionen 4, deren weiche Konsistenz, die aufgrund des Eindringens des Wassers während der Aufgußphase für das Getränk zurückgeblieben ist, auch von der mittleren Rolle 47, die sich an dem Bauch des ausgelaugten Kaffeekissens abstützt, eingeschlossen wird, so daß die ausgelaugten Kissen in ihrer Form gehalten werden und auch in der Mitte nicht nachgeben können, wodurch ein Herausrutschen der auf Zug beanspruchten Seitenbänder aus ihrer Position während des Betriebs vermieden wird.

Selbstverständlich sind über das beschriebene und dargestellte Ausführungsbeispiel hinaus Abänderungen an der Maschine möglich, ohne daß diese gleichwertigen Mechanismen oder ergänzenden Maßnahmen den beanspruchten Erfindungsgedanken verlassen. Unter Beibehaltung der oben erläuterten und in der Zeichnung dargestellten, bevorzugten Ausführungsform sind im Rahmen des Erfindungsgedankens andere Formgebungen und Konstruktionen möglich.

Aus der Beschreibung des Ausführungsbeispiels ergibt sich, daß die Vorrichtung gemäß der Erfindung die durch die Aufgabenstellungen vorgegebenen und weitere Vorteile aufweist. Die funktionale und modulare automatische Maschine, die mit vorgefertigten Monodosisportionen, die zu Bändern zusammengefaßt sind, um italienischen Espresso-Kaffee herzustellen, beschickt wird, ist äußerst einfach aufgebaut und funktioniert sehr wirkungsvoll; insbesondere ist das Zuführsystem strukturell und funktionell sehr vorteilhaft, da auch wesentliche Wartungs- und Reparatureingriffe leicht und rasch durchgeführt werden können und das zugeführte Band jederzeit geführt gehalten wird, auch bei Schwankungen der äußeren Abmessungen und der Konsistenz aufgrund der Nutzung.

Ein wesentlicher Vorteil besteht schließlich in der ständigen Führung und dem ununterbrochenen Einschluß des Bandes und der Portionen, so daß ein Klemmen trotz der Konsistenzschwankungen des Bandes und der Kaffeemehlportionen verhindert wird.

Nicht zuletzt besteht ein weiterer Vorteil in der Einfachheit und konstruktiven Zweckmäßigkeit der gesamten Maschine, deren Montage nahezu ausschließlich durch selbsthaltende Steckverbindungen der Teile durchgeführt werden kann. Entsprechendes gilt für die Mitnahmeeinrichtung, bei der ein Stift zwischen den Wänden eingeschlossen wird, während der andere lediglich von den beiden Federn in seinem Sitz gehalten wird, so daß auch größere Wartungs- und Reparatureingriffe sofort durchgeführt werden können, ohne daß besondere Werkzeuge notwendig sind.

## Patentansprüche

**1.** Maschine zur automatischen Zubereitung von Espresso-Kaffee mit einer Mitnahmeeinrichtung für Bänder mit vorgepreßten, zuzuführenden Kaffeepulverkuchen, gekennzeichnet durch wenigstens eine untere Kalotte (21) zur Aufnahme von Kaffeepulverkuchen, welche bei einer vertikalen Verschiebung über eine Kurbelwelle (9) und eine Pleuelstange (11) mit axialem Druck beaufschlagt wird und dabei auf wenigstens eine feste, obere Kalotte (33) zur Aufnahme des Kaffeepulverkuchens trifft, der eine Heizgruppe (30, 31, 32) zugeordnet ist, wobei den Zwischenraum zwischen den Kalotten (21, 33) die vorgepreßten Monodosiskuchen (4) eines Bandes (3) nacheinander in geführter Weise durchlaufen und das Band (3) an seinen Flügeln von Rollen (43A, 43B) mitgenommen wird, die auf den Ausgangsabschnitt der verbrauchten Kaffeepulverkuchen (4) einwirken.

**2.** Maschine zur automatischen Zubereitung von Espresso-Kaffee mit einer Mitnahmeeinrichtung für Bänder mit vorgepreßten, zuzuführenden Kaffeepulverkuchen, gekennzeichnet durch:
- einen Behälter (2) für ein Band (3) aus vorgepreßten Monodosis-Kaffeepulverportionen (4) und einen Sammelbehälter (5) für ausgelaugte Kaffeepulverkuchen (4),
- ein kastenförmiges Unterteil mit zwei Wänden (7A, 7B), zwischen denen eine Kurbelwelle (9) gelagert ist, die mit einer Pleuelstange (11) verbunden ist, deren Kopf an einem Kolben (15) angelenkt ist, welcher in einem Zylinder (18) verschiebbar ist, dessen Kolbenboden vertieft ist und eine untere Kalotte (21) zur Aufnahme jeweils eines Kaffeepulverkuchens bildet,
- einen Kopf (29), in den die obere Kalotte (33) zur Aufnahme eines Kaffeepulverkuchens eingearbeitet ist, die der unteren Kalotte (21) gegenüberliegt, und der eine Wärmetauschergruppe (31, 32) aufnimmt,
- eine Führungsbahn (40) für das Band (3) aus Kaffeeportionen (4), die sich im Zwischenraum zwischen der unteren Kalotte (21) und der oberen Kalotte (33) erstreckt und in Vorschubrichtung des Bandes (3) in eine Mitnahmeeinrichtung (43) für das Band (3) mündet, welche aus einer unteren, angetriebenen Rollengruppe (43A) und einer oberen, freilaufenden Rollengruppe (43B) besteht, die gegeneinander verschiebbar sind, um die seitlichen Flügel des Bandes (3) mit den Poritionskissen (4) einzuschließen.

**3.** Maschine nach Anspruch 2, dadurch gekennzeichnet, daß die untere Rollengruppe (43A) der Mitnahmeeinrichtung (43) aus einem Stift (44) besteht, der in seinem mittleren Bereich einen quadratischen Querschnitt hat, zwischen den beiden Wänden (7A, 7B) eingespannt ist und zwei seitliche, gerändelte Rollen (46) trägt, die an ihrer Innenseite ausgekehlt sind, um sich tangential an die untere Umfangsform der Kissen (4) anzupassen, sowie eine mittlere Rolle (47), die sich am Bauch des Kissens (4) abstützt.

**4.** Maschine nach Anspruch 2 oder 3, dadurch gekennzeichnet, daß die obere Rollengruppe (43B) der Mitnahmeeinrichtung (43) einen freilaufenden Stift (48) hat, der zwei seitliche, freilaufende und gerändelte Rollen (52) trägt, die an ihrer Innenseite ausgekehlt sind und sich dadurch tangential an die obere Umfangsform der Kissen (4) anpaßt, wobei der Stift (48) mit seinen beiden Enden in Schlitze (49) eingesetzt ist, welche in die Wände (7A, 7B) eingearbeitet sind, wo er nur durch die Zugkraft von Schraubenfedern (50) gehalten wird, die mit einem Ende an dem freilaufenden Stift (48) und mit dem anderen Ende an den Wänden (7A, 7B) angreifen.

**5.** Maschine nach einem der Ansprüche 2 bis 4, dadurch gekennzeichnet, daß die Führungsbahn (40) für das Band (3) mit den Kaffeepulverkuchen (4), das sich im Zwischenraum zwischen der unteren Kalotte (21) und der oberen Kalotte (33) erstreckt, ein Profilstück (19) aufweist, welches zwischen den beiden Wänden (7A, 7B) eingeschlossen ist und in das der Zylinder (18) eingearbeitet ist.

**6.** Maschine nach einem der Ansprüche 2 bis 5, dadurch gekennzeichnet, daß die Führungsbahn (40) für das Band (3) aus den Kaffeepulverkuchen (4), das sich durch den Zwischenraum zwischen der unteren Kalotte (21) und der oberen Kalotte (33) erstreckt, in Vorschubrichtung des Bandes (3) gesehen einen hinteren Vorsprung (41) aufweist, der über dem Behälter (2) liegt, einen Sensor (42) zum Erfassen der Anwesenheit der Kaffeepulverkuchen (4) aufweist und über dem eine Brücke (41B) liegt, die die Kaffeepulverkuchen (4) von oben her hält und deren Umlenkung aus der vertikalen Vorschubstellung in die horizontale Gebrauchsstellung erleichtert.

**7.** Maschine nach einem der Ansprüche 2 bis 6, dadurch gekennzeichnet, daß die Pleuelstange (11) mit ihrem Kopf an einem Stift (12) angelenkt ist, der in einer Buches (13) gelagert ist, in welche ein unterer Fortsatz (14) des Kolbens (15) eingreift, der durch einen Gewindestift (16) fixiert ist, dessen Spitze in eine in den Fortsatz eingearbeitete Umfangsnut (17) eingreift.

**8.** Maschine nach einem der Ansprüche 2 bis 7, dadurch gekennzeichnet, daß der Zylinder (18) in ein Profilstück (19) eingearbeitet ist, welches zwischen den beiden Wänden (7A, 7B) eingeschlossen ist und durch seitliche Vorsprünge (20A) gehalten wird, die in entsprechende Sitze (20B) eingreift, welche in die Innenseite der Wände (7A, 7B) eingearbeitet sind.

**9.** Maschine nach einem der Ansprüche 2 bis 8, dadurch gekennzeichnet, daß der Kolben (15) einen vertieften Kolbenboden hat, welcher die untere Kalotte (21) bildet, eine Filterschale (22) aufnimmt und eine Ablauföffnung (23) hat, die in eine Leitung (24) mündet, welche sich durch ein in die vordere Wand (7A) eingearbeitetes Schlitzloch (25) nach außen erstreckt, wo sie distal einen Schnabel (26) hat, der über einem Becher (27) zur Aufnahme des Getränkes liegt.

**11.** Maschine nach einem der Ansprüche 2 bis 10, dadurch gekennzeichnet, daß die obere Kalotte (33) in das untere Element (30) des Kopfes (29) eingearbeitet ist, von einem Dichtring (34) eingeschlossen wird und einen Filter (35) aufnimmt, über welchem eine Leitung (36) für die Zufuhr heißen Wasser mündet, in welche ein Elektromagnetventil (37) eingesetzt ist, das die Verbindung der Leitung (36) mit der Wärmetauschereinheit (31, 32) steuert.

**12.** Maschine nach einem der Ansprüch 2 bis 11, dadurch gekennzeichnet, daß die Wärmetauschereinheit (31, 32) aus einer sich in einer Ebene erstreckenden Leitungsschlange (38) besteht, die in den Zwischenraum zwischen dem mittleren Element (31) und dem oberen Element (32) des Turmes (29) eingearbeitet ist, sowie aus einem elektrischen Widerstand (39), welcher sich innerhalb des mittleren Elementes (31) erstreckt.

**13.** Maschine nach einem der Ansprüche 2 bis 12, dadurch gekennzeichnet, daß die Wände (7A, 7B) miteinander über Bolzen (8A) verbunden sind, die in konische Sitze (8B) eingesteckt sind, welche mit ihren Spitzen nach Art einer Nut- und Federverbindung selbstzentrierend ineinander eingreifen.

**14.** Maschine nach einem der Ansprüche 2 bis 13, dadurch gekennzeichnet, daß die Pleuelstange (11) eine einstellbare Länge hat.

**15.** Maschine nach einem der Ansprüche 2 bis 14, dadurch gekennzeichnet, daß die untere, angetriebene Rollengruppe (43a) für die Mitnahme und den Einschluß des Bandes (3) mit den Kissen (4) angepaßte Formgebung hat.

**16.** Maschine nach einem der Ansprüche 2 bis 15, dadurch gekennzeichnet, daß die freilaufende, obere Rollengruppe (43B) für die Mitnahme und den Einschluß des Bandes (3) mit den Kissen (4) angepaßte Formgebung hat.

**17.** Maschine nach einem der Ansprüche 2 bis 16, dadurch gekennzeichnet, daß der Behälter (2) zur Aufnahme des Bandes (3) mit vorgepreßten Monodosis-Kaffeepulverkissen (4) an die handelsübliche Form und Verpackung des Bandes (3) angepaßt ist.
